(19) **Europäisches Patentamt / European Patent Office / Office européen des brevets**

(11) **EP 4 638 133 B1**

(12) **FASCICULE DE BREVET EUROPEEN**

(45) Date de publication et mention de la délivrance du brevet:
**05.08.2026 Bulletin 2026/32**

(21) Numéro de dépôt: **23821700.4**

(22) Date de dépôt: **18.12.2023**

(51) Classification Internationale des Brevets (IPC):
**B33Y 80/00** *(2015.01)* **B32B 5/32** *(2006.01)*
**B68G 7/00** *(2006.01)* **B68G 11/02** *(2006.01)*
**B60N 2/70** *(2006.01)* **B29D 99/00** *(2010.01)*
**A47C 7/02** *(2006.01)* **A47C 23/00** *(2006.01)*
**A47C 27/06** *(2006.01)* **B22F 3/11** *(2006.01)*
**B22F 10/10** *(2021.01)* **B22F 10/20** *(2021.01)*

(52) Classification Coopérative des Brevets (CPC):
**B33Y 80/00; A47C 7/025; A47C 7/027;
A47C 23/002; A47C 27/065; B29D 99/0092;
B60N 2/7017; B68G 7/00; B68G 11/02; F16F 7/00;**
B22F 3/1115; B22F 10/10; B22F 10/20

(86) Numéro de dépôt international:
**PCT/EP2023/086287**

(87) Numéro de publication internationale:
**WO 2024/133035 (27.06.2024 Gazette 2024/26)**

(54) **STRUCTURE ARCHITECTURÉE EN TREILLIS POUR DISPOSITIF COMPORTANT UNE INTERFACE SOUPLE**

ARCHITEKTURGITTERSTRUKTUR FÜR EINE VORRICHTUNG MIT EINER FLEXIBLEN SCHNITTSTELLE

ARCHITECTURED LATTICE STRUCTURE FOR A DEVICE HAVING A FLEXIBLE INTERFACE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.12.2022 FR 2214043**

(43) Date de publication de la demande:
**29.10.2025 Bulletin 2025/44**

(73) Titulaire: **Commissariat à l'Energie Atomique et aux Energies Alternatives
75015 Paris (FR)**

(72) Inventeurs:
 • **BOUVIER, Michaël
  38054 Grenoble cedex 09 (FR)**
 • **GLEYZES, Hervé
  38054 Grenoble cedex 09 (FR)**

(74) Mandataire: **Ipsilon
12 Avenue d'Italie
75013 Paris (FR)**

(56) Documents cités:
**EP-A1- 3 954 252     US-A1- 2021 187 897**

**Description**

**Domaine technique**

La présente invention concerne le domaine des structures architecturées en treillis, notamment pour former un dispositif comportant une interface souple, par exemple molletonnée. Ces structures architecturées en treillis peuvent être destinées à absorber un choc et/ou à former un appui corporel, tel qu'une assise d'un siège, un coussin, un matelas, un accoudoir, un appui-tête, un repose-poignet, une poignée de préhension ou un rembourrage de casque.

**Etat de la technique antérieure**

Les structures avec une architecture en treillis présentent une porosité ouverte importante. Elles sont formées de brins ou poutres, généralement denses, connectés entre eux selon des motifs géométriques élémentaires qui se répètent périodiquement dans l'espace. Elles peuvent présenter des propriétés mécaniques en compression avantageuses, en étant notamment aptes à supporter de grandes déformations sans rupture ou déformation irréversible. Elles sont ainsi adaptées à des applications où l'aptitude à stocker et/ou dissiper de l'énergie sous compression est importante, par exemple pour la conception d'amortisseurs de chocs. Elles sont aussi adaptées à des applications pour lesquelles la sensation de confort d'utilisation est recherchée, par exemple pour la conception de supports de soutien corporel, tels des assises de sièges, des coussins, des matelas, des accoudoirs, des appui-têtes, des repose-poignets ou des organes de préhension, par exemple des poignées.

Dans ces applications, il est notamment recherché des structures présentant un module de rigidité élastique faible et/ou aptes à absorber et/ou dissiper une quantité d'énergie de déformation avant rupture, aussi dénommée densification par unité de volume, élevée.

Les propriétés mécaniques en compression d'une structure architecturée en treillis sont fonction du matériau source constitutif et diffèrent en fonction du motif géométrique élémentaire formé par les brins/poutres ainsi que ses paramètres dimensionnels. L'article de M. Nasim et U. Galvanetto : « Mechanical characterisation of additively manufactured PA12 lattice structures under quasi-static compression », Materials Today Communications, Volume 29, 2021, 102902, compare les propriétés mécaniques de matériaux architecturé en treillis en fonction du motif élémentaire des brins/poutres.

Parmi différents motifs élémentaires connus, le motif de type dodécaédrique rhombique présente un faible module de rigidité élastique et une forte densification par unité de volume.

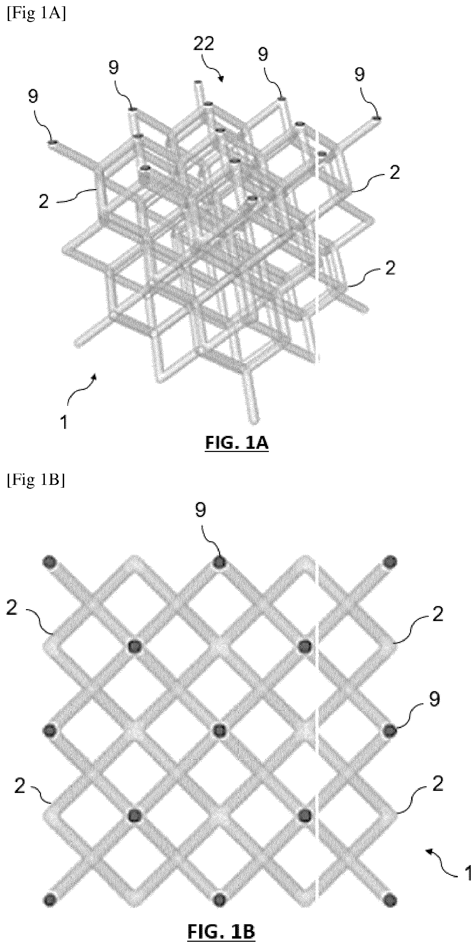

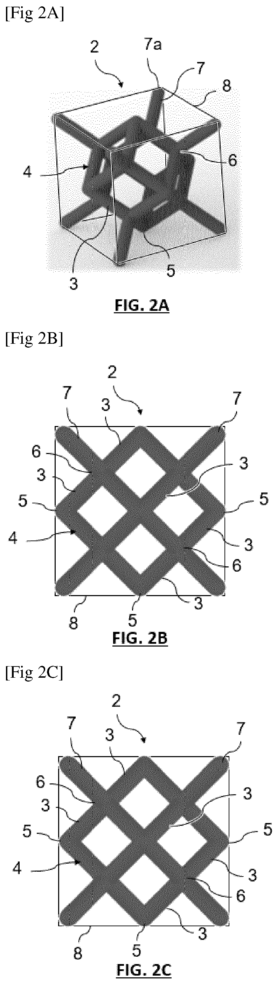

On a illustré aux figures 1A et 1B un treillis 1 formé d'une pluralité de motifs élémentaires de type dodécaédrique rhombique 2 répétés périodiquement et en contact les uns avec les autres et aux figures 2A, 2B et 2C un motif élémentaire de type dodécaédrique rhombique 2. Le motif élémentaire 2 comprend vingt-quatre brins 3 liés entre eux de sorte à former les arêtes d'un dodécaèdre rhombique 4. Le dodécaèdre rhombique 4 comprend six sommets à angles aigus 5 et huit sommets à angles obtus 6. Un sommet à angle aigu 5 est un sommet où quatre faces du dodécaèdre rhombique 4 se rencontrent sur leurs angles aigus. Un sommet à angle obtus 6 est un sommet où trois faces du dodécaèdre rhombique 4 se rencontrent sur leurs angles obtus. Le motif élémentaire 2 est inscrit dans une cellule élémentaire 8, qui correspond au parallélépipède rectangle circonscrit à chacun des sommets à angles aigus 5. Le motif élémentaire 2 comprend également huit brins de liaison 7, chacun reliant un des sommets à angles obtus 6 au sommet le plus proche de la cellule élémentaire 8. Les brins de liaison 7 s'étendent le long des diagonales de la cellule élémentaire 8.

Le motif élémentaire de type dodécaédrique rhombique 2 est similaire au motif dénommé « fluorite » dans le logiciel « nTopology 3.26.3 » développé et commercialisé par la société nTopology, INC. En effet, il est similaire à une structure cristalline de la fluorite pour laquelle chacun des sites atomiques auraient été reliés entre eux par des brins.

Comme cela est illustré aux figures 1A et 1B, les motifs élémentaires de type dodécaédrique rhombique 2 adjacents sont fixés entre eux par contact entre leurs brins de liaison 7 respectifs et par contact entre leurs sommets à angle aigu respectifs.

Bien qu'une structure architecturée en treillis 1 selon un motif élémentaire 2 périodique de type dodécaédrique rhombique présente de bonnes caractéristiques mécaniques, notamment pour la substitution de certaines mousses de polyuréthane, elle présente toutefois une faible surface de contact 9. La surface de contact 9 est l'ensemble des points de la structure 1 de la surface enveloppant une face extérieure 22 de ladite structure 1. Pour la structure monolithique architecturée en treillis 1 des figures 1A et 1B, la surface de contact 9 est définie par les extrémités 7a des brins de liaison 7 et des sommets à angles aigus 5 sur la face extérieure 22 de la structure 1. Ainsi, lors de la mise en contact d'un solide, par exemple une partie d'un corps humain, contre la structure 1, l'effort de contact est réparti sur une aire de contact faiblement étendue. Il en résulte des contraintes localement élevées au contact de la surface de contact 9. Ainsi, lors d'un appui corporel, une sensation d'inconfort est ressentie par l'utilisateur, les brins libres et les arêtes agissant alors à la manière d'un ensemble de pointes.

US 2021/187897 A1 décrit une structure en micro-réseau comprenant une pluralité de filaments interconnectés s'étendant dans au moins trois directions différentes à partir de plusieurs nœuds.

EP 3 954 252 A1 concerne un élément de coussin de siège passager et un corps de remplissage.

Il existe donc un besoin pour une structure architecturée en treillis surmontant ces inconvénients. Il existe en outre un besoin pour une structure architecturée en treillis ayant un faible module de rigidité élastique et une forte densification par unité de volume, la structure présentant une grande surface de contact lors d'un appui corporel et qui, de préférence, soit agréable au toucher.

**Exposé de l'invention**

L'invention concerne une structure architecturée en treillis comprenant :

- un treillis de corps comportant une pluralité de motifs élémentaires de corps répétés périodiquement et en contact les uns avec les autres, chaque motif élémentaire de corps comportant des brins de corps reliés entre eux pour former les arêtes d'un polyèdre et des brins de liaison reliant le polyèdre aux sommets de la cellule élémentaire de corps, qui est le plus petit parallélépipède rectangle circonscrit au motif élémentaire de corps,
- un treillis superficiel définissant une face de la structure et recouvrant au moins partiellement le treillis de corps, le treillis superficiel comportant une pluralité de motifs élémentaires superficiels répétés périodiquement, chaque motif élémentaire superficiel comportant un bloc d'appui s'étendant dans un plan médian, parallèle à la face de la structure définie par le treillis superficiel, et des pieds déformables chacun comportant une extrémité, fixée au bloc d'appui et distante des autres pieds, et, une autre extrémité, distante du plan médian et commune à tous les autres pieds et à au moins un brin de corps,

le treillis superficiel étant configuré pour que sous l'effet d'un effort de compression normal au plan médian, les pieds se déforment pour déplacer le bloc d'appui en translation selon un axe parallèle à l'effort de compression.

Une « cellule élémentaire » est le plus petit parallélépipède rectangle circonscrit à un motif élémentaire. La cellule élémentaire est une construction géométrique fictive, c'est-à-dire qu'elle n'est pas constituée de matière contrairement aux brins et aux poutres.

Avantageusement, le treillis superficiel augmente la surface de contact de la structure architecturée en treillis sans influencer de manière conséquente les propriétés mécaniques en compression de cette dernière qui sont majoritairement déterminées par le treillis de corps. La surface de contact est formée par le bloc d'appui et peut ainsi être exempte de pointe. Il en résulte que, la contrainte au contact est moindre lors d'un appui corporel, et la pièce est donc plus confortable pour l'utilisateur.

En outre, un effort en compression appliqué sur le treillis superficiel est transmis par ce dernier de manière homogène au treillis de corps. Il en découle une bonne répartition des contraintes dans l'ensemble de la structure architecturée en treillis et donc un meilleur confort pour l'utilisateur.

De préférence, les pieds de chaque motif élémentaire superficiel sont disjoints les uns des autres sur leurs portions entre l'extrémité fixée au bloc d'appui et l'extrémité commune à chacun des pieds et à au moins un brin de corps. Avantageusement, le treillis superficiel est alors plus souple, c'est-à-dire qu'il présente un plus faible module de rigidité élastique, et, lors d'un effort en compression appliqué sur le treillis superficiel, le treillis de corps est peu contraint par le treillis superficiel. De préférence, chaque pied est formé d'une unique branche.

De préférence, l'extrémité commune à chacun des pieds et à au moins un brin de corps est fixée à un des sommets du polyèdre. De préférence, ledit sommet est compris dans une des faces de la cellule élémentaire de corps. De préférence, ledit sommet est au centre de ladite face de la cellule élémentaire de corps.

De préférence, pour chacun des pieds, la distance, mesurée parallèlement au plan médian, entre l'extrémité fixée au bloc d'appui et l'autre extrémité commune à chacun des pieds et à au moins un brin de corps est comprise entre 2 et 50 mm.

De préférence, vue orthogonalement au plan médian, l'extrémité commune à chacun des pieds et à au moins un brin de corps est équidistante de chacune des extrémités fixées au bloc d'appui du motif élémentaire superficiel. Avantageusement, cela améliore la répartition de l'effort en compression à chacun des pieds.

De préférence, vue orthogonalement au plan médian, chacune des extrémités fixées au bloc d'appui est équidistante des deux autres extrémités les plus proches qui sont fixées au bloc d'appui. Avantageusement, cela améliore la répartition de l'effort en compression à chacun des pieds.

De préférence, chaque motif élémentaire superficiel comporte quatre pieds. De préférence, vue orthogonalement au plan médian, les pieds forment ensemble un motif en forme de X.

De préférence, chaque pied est symétrique d'au moins deux pieds adjacents, chaque symétrie étant opérée par rapport à un plan perpendiculaire au plan médian.

Chacun des pieds peut s'étendre le long d'une ligne droite, notamment rectiligne. La ligne droite peut former un angle compris entre 10° et 70° avec le plan médian.

Selon une variante préférée, chacun des pieds peut s'étendre le long d'une ligne courbe, de préférence la ligne courbe étant une courbe de Bézier ou un arc d'ellipse. De préférence, la ligne courbe est une courbe de Bézier quadratique ou cubique.

Une courbe de Bézier est une courbe définie par l'équation suivante :

[Math 1]

$$B(t) = \sum_{i=0}^{n} \binom{n}{i} (1-t)^{n-i} t^i P_i,$$

Dans laquelle,

- t est un nombre réel positif compris entre 0 et 1,
- n est le degré d'ordre de la courbe de Bézier, supérieur ou égal à deux, et
- les $P_i$ sont les points de contrôle de la courbe de Bézier avec $P_0$ le point de contrôle initial de la courbe de Bézier quadratique situé à l'extrémité commune à chacun des pieds et à au moins un brin de corps, et, $P_n$ le point de contrôle final de la courbe de Bézier quadratique situé à l'extrémité fixée au bloc d'appui.

Une courbe de Bézier quadratique, respectivement cubique, est une courbe de Bézier d'ordre n égal à deux, respectivement à 3.

La ligne courbe peut être tracée par un logiciel de conception assistée par ordinateur ou grâce à un logiciel de Conception Algorithmique tel que le logiciel « Grasshopper® » de Robert McNeel & Associates, et notamment de sa fonction « Bézier Span ».

La ligne courbe peut être comprise dans un plan incliné par rapport au plan médian d'un angle d'inclinaison compris entre 5° et 90 °. Notamment, les points de contrôle $P_i$ de la courbe de Bézier peuvent être inclus dans ledit plan incliné.

L'angle d'inclinaison peut être égal à 90°. Le cas échéant, vu orthogonalement au plan médian, chacun des pieds s'étend de manière rectiligne. Un tel arrangement des pieds bloque, avantageusement, toute rotation du bloc d'appui autour d'un axe compris dans le plan médian. De préférence, vu orthogonalement au plan médian, chacun des pieds forme un angle égal à $2\pi/N$ avec les pieds adjacents, N étant le nombre de pieds. De préférence, les pieds sont invariants par au moins une rotation autour d'un axe d'armature normal au plan médian, de préférence par une rotation d'angle $2\pi/N$, N étant le nombre de pieds. En particulier, N peut être égal à quatre, la rotation d'invariance étant égale à 90°.

En variante, l'angle d'inclinaison peut être inférieur à 90°. Vu orthogonalement au plan médian, chacun des pieds peut s'étendre en formant un arc d'ellipse, de préférence un arc de cercle. De préférence, vue orthogonalement au plan médian, les pieds forment un X constitué de deux C mis dos-à-dos. Autrement dit, vu orthogonalement au plan médian, les pieds peuvent former un x cursif.

De manière alternative, la ligne courbe peut être tridimensionnelle. Une courbe tridimensionnelle est une courbe qui ne peut pas être entièrement comprise dans un plan. Notamment, le degré d'ordre n de la courbe de Bézier peut être supérieur ou égal à trois et les points de contrôle $P_i$ de la courbe de Bézier sont agencés de sorte à ne pas pouvoir être inclus ensemble dans un même plan.

De préférence, la ligne courbe est exempte de point d'inflexion. Un « point d'inflexion » est un point où la courbe change de signe de courbure, c'est-à-dire que la courbe passe de concave à convexe ou inversement.

De préférence, la ligne courbe est concave lorsqu'observée depuis le bloc d'appui.

De préférence, la tangente de la ligne courbe à l'extrémité fixée au bloc d'appui forme un angle compris entre 45° et 135° avec le plan médian, de préférence égal à 90°. Dans le cas d'une courbe de Bézier, ladite tangente est colinéaire avec le vecteur $P_n P_{n-1}$ défini par le point de contrôle final $P_n$ de la courbe de Bézier et l'avant dernier point de contrôle $P_{n-1}$ de la courbe de Bézier.

De préférence, la tangente de la ligne courbe à l'extrémité commune à chacun des pieds et à au moins un brin de corps est parallèle avec le plan médian. Dans le cas d'une courbe de Bézier, ladite tangente est colinéaire avec le vecteur $P_0 P_1$ défini par le point de contrôle initial $P_0$ de la courbe de Bézier et le deuxième point de contrôle $P_1$ de la courbe de Bézier.

De préférence, les pieds sont invariants par au moins une rotation autour d'un axe d'armature normal au plan médian, de préférence par une rotation d'angle $\pi$.

De préférence, la distance, mesurée orthogonalement au plan médian, entre l'extrémité fixée au bloc d'appui et l'extrémité commune à chacun des pieds et à au moins un brin de corps est comprise entre 3 et 50 mm.

De préférence, vue orthogonalement au plan médian, la plus courte distance entre chaque pied du motif élémentaire superficiel et le plus proche pied du plus proche motif élémentaire superficiel adjacent est supérieure à 1 mm. Avantageusement, cela limite, voire supprime, le risque de collision entre des pieds de deux motifs élémentaires superficiels adjacents lorsqu'un effort en compression est appliqué auxdits motifs élémentaires superficiels.

De préférence, chaque motif élémentaire superficiel est inscrit dans une cellule élémentaire superficielle de forme parallélépipèdique rectangle et présentant une face comprise dans une face d'une des cellules élémentaires de corps. De préférence, lesdites faces sont concentriques.

De préférence, ladite face de la cellule élémentaire superficielle présente des côtés compris entre 5 mm et 50 mm.

De préférence, ladite face de la cellule élémentaire superficielle est carrée.

De préférence, le bloc d'appui comporte une armature comportant une pluralité de poutres d'armature reliées entre elles pour former les côtés d'au moins un polygone parallèle au plan médian. Avantageusement, l'armature transmet uniformément l'effort en compression à chacun des pieds. Cette transmission uniforme assure le maintien du bloc d'appui parallèle au plan médian lors de la déformation des pieds.

De préférence, l'extrémité de chaque pied fixée au bloc d'appui est fixée à l'armature. Cela simplifie la fixation de chaque pied au bloc d'appui de sorte à éviter toute collision entre le pied et le bloc d'appui lors de la déformation du pied.

Le bloc d'appui peut consister en l'armature.

De préférence, l'armature a une épaisseur, mesurée orthogonalement au plan médian, comprise entre 0,6 et 5 mm, de préférence entre 0,8 et 3 mm.

De préférence, les poutres d'armature sont en un matériau polymère ou en un métal ou en composite, par exemple en un thermoplastique, de préférence en un thermoplastique élastomère, ou en un polymère chargé, par exemple, de micro-billes de verre.

De préférence, l'armature comporte au moins quatre, de préférence au moins six, poutres d'armatures.

Le polygone peut être un hexagone, de préférence convexe et/ou irrégulier.

Les poutres d'armature peuvent être reliées entre elles pour former les côtés de deux polygones parallèles au plan médian, un des polygones, dit polygone intérieur, étant agencé dans l'autre des polygones, dit polygone extérieur. De préférence, l'armature comporte des poutres d'interconnexion, chacune étant reliée par une extrémité aux poutres d'armature du polygone intérieur et par l'autre extrémité aux poutres d'armature du polygone extérieur. De préférence, le polygone intérieur est une réduction du polygone extérieur. De préférence, chacun des polygones est un rectangle, de préférence un carré. De préférence, l'extrémité de chaque pied fixée au bloc d'appui est fixée aux poutres d'armature du polygone extérieur.

De préférence, l'armature s'étend dans un plan parallèle au plan médian.

De préférence, l'armature est invariante par au moins une rotation autour d'un axe d'armature normal au plan médian, de préférence par une rotation d'angle $\pi/2$. De préférence, l'axe d'armature passe par l'extrémité commune à chacun des pieds et à au moins un brin de corps.

De préférence, l'armature est conformée pour être distante des brins de corps et des brins de liaison lorsque les pieds sont déformés par l'effort de compression et que les extrémités fixées au bloc d'appui sont comprises dans la cellule élémentaire de corps. Avantageusement, l'absence de contact entre l'armature et les brins de corps et les brins de liaison, lorsque les pieds sont déformés en compression, réduit l'influence du treillis superficiel sur les propriétés mécaniques de la structure architecturée en treillis, notamment sur sa densification par unité de volume. En particulier, le comportement mécanique du treillis superficiel, sous l'effet d'un effort de compression normal au plan médian, est majoritairement déterminé par la déformation des pieds.

De préférence, l'armature est conformée pour être superposée aux points de liaison entre les brins de liaison et les brins de corps lorsque les pieds sont déformés par l'effort de compression.

De préférence, le bloc d'appui couvre au moins 50 % de la face du motif élémentaire superficiel vue orthogonalement au plan médian.

De préférence, le bloc d'appui comporte une peau s'étendant parallèlement au plan médian et couvrant au moins 50 % de la face du motif élémentaire superficiel vue orthogonalement au plan médian. Avantageusement, la peau augmente la surface de contact de la structure architecturée en treillis. La peau empêche également le contact entre l'utilisateur en appui avec la structure architecturée en treillis et les pointes des polyèdres des motifs élémentaires de corps. La peau peut améliorer en outre l'aspect esthétique de la structure architecturée en treillis. Notamment, la peau peut comprendre une marque visuelle, par exemple une impression, une empreinte et/ou une texture. Les peaux de plusieurs blocs d'appui, notamment adjacents, peuvent délimiter un motif visuel, par exemple un logo. Par ailleurs, la peau peut recouvrir les pieds du treillis superficiel. Elle protège ainsi les pieds du treillis superficiel en empêchant l'arrachement desdits pieds ou en empêchant une sollicitation mécanique indésirée sur lesdits pieds.

Le bloc d'appui peut consister en la peau. Les pieds sont alors fixés directement sur la peau. L'épaisseur de la peau peut être adaptée en conséquence. Notamment, la peau peut présenter une épaisseur plus importante au niveau des points de fixation des pieds sur la peau.

De préférence, la peau présente une épaisseur comprise entre 0,6 et 2 mm, de préférence entre 0,8 et 1,5 mm.

De préférence, la peau est en un matériau polymère ou en un métal ou en composite, par exemple en un thermoplastique, de préférence en un thermoplastique élastomère, ou en un polymère chargé, par exemple, de micro-billes de verre.

De préférence, la peau est portée par l'armature, de préférence fixée à l'armature.

La peau peut être superposée à l'armature. De préférence, vue orthogonalement au plan médian, la peau fait saillie au-delà de l'armature.

De manière alternative, la peau peut être coplanaire avec l'armature. De préférence, la peau est logée dans au moins un des polygones, de préférence dans le polygone intérieur, formés par les poutres d'armature.

La peau du motif élémentaire superficiel peut être disjointe des peaux des autres motifs élémentaires superficiels. Le treillis superficiel transmet alors de manière localisée l'effort de compression au treillis de corps. Les motifs élémentaires superficiels subissant l'effort de compression le transmettent aux motifs élémentaires de corps adjacents. L'influence des motifs élémentaires superficiels ne subissant pas l'effort de compression sur le comportement mécanique de la structure architecturée en treillis est négligeable.

En variante, la peau du motif élémentaire superficiel comprend des points de contact connectant de manière solidaire ladite peau avec les peaux des motifs élémentaires superficiels adjacents. La transmission de l'effort de compression du treillis superficiel au treillis de corps est ainsi plus homogène sur l'ensemble de la structure. La peau est en outre plus robuste. La solidarité entre les peaux des différents motifs élémentaires superficiels limite le risque d'arrachement individuel d'un motif élémentaire superficiel et bloque tout mouvement en rotation de chaque bloc d'appui.

De préférence, la peau est conformée pour être distante des brins de liaison lorsque les pieds sont déformés par l'effort de compression et que les extrémités fixées au bloc d'appui sont comprises dans la cellule élémentaire de corps.

De préférence, la peau présente une ouverture alignée, orthogonalement au plan médian, à un sommet du polyèdre. De préférence, l'ouverture est alignée, orthogonalement au plan médian, avec l'extrémité commune à chacun des pieds et à au moins un brin de corps. L'ouverture facilite le dépoudrage de la structure selon l'invention après sa fabrication par un procédé de fabrication additive sur lit de poudre. En outre, grâce à l'ouverture, la peau n'appuie pas sur une pointe lors de la transmission de l'effort de compression ce qui limite les risques de déchirure de la peau.

De préférence, la structure architecturée en treillis est monolithique. De préférence, la structure architecturée en treillis est faite d'un même matériau.

De préférence, l'épaisseur du treillis superficiel, mesurée orthogonalement au plan médian, est comprise entre 4 et 50 mm, de préférence entre 4 et 20 mm.

De préférence, la cellule élémentaire de corps est cubique, de préférence de côté compris entre 5 et 50 mm.

De préférence, la cellule élémentaire de corps est circonscrite au polyèdre.

De préférence, le polyèdre est un dodécaèdre rhombique. De préférence, les brins de liaison relient les sommets à angles obtus du dodécaèdre rhombique aux sommets de la cellule élémentaire de corps.

Un « dodécaèdre rhombique » est un polyèdre convexe à douze faces rhombiques. Il comprend donc six sommets à angles aigus, huit sommets à angles obtus et vingt-quatre arêtes.

De préférence, le diamètre des brins de corps et/ou le diamètre des brins de liaison et/ou le diamètre des pieds est compris entre 0,6 et 3 mm, de préférence entre 0,8 et 2 mm.

De préférence, les brins de corps et/ou les brins de liaison et/ou les pieds sont en un matériau polymère ou en un métal ou en composite, par exemple en un thermoplastique, de préférence en un thermoplastique élastomère, ou en un polymère chargé, par exemple, de micro-billes de verre.

L'invention concerne également un dispositif comportant une structure architecturée en treillis selon l'invention, le dispositif étant choisi parmi :

- un amortisseur de choc,
- un support de soutien corporel, par exemple une assise de sièges, un coussin, un matelas, un accoudoir, un appui-tête, un rembourrage de casque, ou un repose-poignet, et
- un organe de préhension, par exemple une poignée de préhension, ou un volant directionnel.

L'invention a également pour objet un procédé de fabrication d'une structure architecturée en treillis selon l'invention au moyen d'une technique de fabrication additive.

## Brève description des dessins

D'autres avantages et caractéristiques ressortiront mieux à la lecture de la description détaillée, faite à titre illustratif et non limitatif, en référence aux figures suivantes :

[Fig 1A] et [Fig 1B] sont des vues en perspective et de dessus respectivement d'un treillis comportant une pluralité de motifs élémentaires périodiques de type dodécaédrique rhombique ;

[Fig 2A], [Fig 2B] et [Fig 2C] sont des vues en perspective, de dessus et de face respectivement d'un motif élémentaire de type dodécaédrique rhombique ;

[Fig 3A] et [Fig 3B] sont des vues en perspective et de dessus respectivement d'une structure architecturée en treillis selon l'invention, les pieds des motifs élémentaires superficiels s'étendant le long de lignes courbes chacune comprise dans un plan perpendiculaire au plan médian du bloc d'appui ;

[Fig 3C] est une vue de face d'une partie de la structure architecturée en treillis des figures 3A et 3B ;

[Fig 4A], [Fig 4B] et [Fig 4C] sont des vues en perspective, de dessous et de face respectivement d'un motif élémentaire superficiel de la structure architecturée en treillis des figures 3A et 3B ;

[Fig 5], [Fig 6] et [Fig 7] sont des vues en perspectives d'exemples de structures architecturées en treillis selon l'invention, présentant différentes positions des points de contrôle intermédiaires des courbes de Bézier quadratiques suivies par chacun des pieds ;

[Fig 8] est une vue de dessus d'une partie de la structure architecturée en treillis des figures 3A, 3B et 3C, les peaux des blocs d'appui n'étant pas représentées ;

[Fig 9A] est une vue en perspective d'une structure architecturée en treillis selon l'invention, les pieds des motifs élémentaires superficiels s'étendant le long de lignes courbes chacune comprise dans un plan oblique au plan médian du bloc d'appui, les peaux étant solidaires les unes aux autres ;

[Fig 9B] est une vue de face d'une partie de la structure architecturée en treillis de la figure 9A ;

[Fig 10] est une vue de dessus de la structure architecturée en treillis des figures 9A et 9B, les peaux des blocs d'appui n'étant pas représentées ;

[Fig 11] est une vue en perspective d'une partie de structure architecturée en treillis selon l'invention, les pieds des motifs élémentaires superficiels s'étendant le long d'une ligne courbe étant une courbe de Bézier cubique et tridimensionnelle ;

[Fig 12A] et [Fig 12B] sont des vues en perspective et de dessus respectivement d'une structure architecturée en treillis selon l'invention, l'armature de chacun des motifs superficiels étant coplanaire avec la peau dudit motif logé et maintenu à l'intérieur ;

[Fig 13] et [Fig 14] sont des graphiques représentant les évolutions de la contrainte en fonction de la déformation au cours d'un essai de compression de structures architecturées en treillis selon l'invention et d'une structure architecturée en treillis selon l'art antérieur.

## Description détaillée

Par souci de clarté, les mêmes références désignant les mêmes éléments selon l'état de l'art et selon l'invention sont utilisées pour toutes les figures 1A à 10.

Les figures 1A à 2C ont été décrites dans la description de l'état de la technique antérieure.

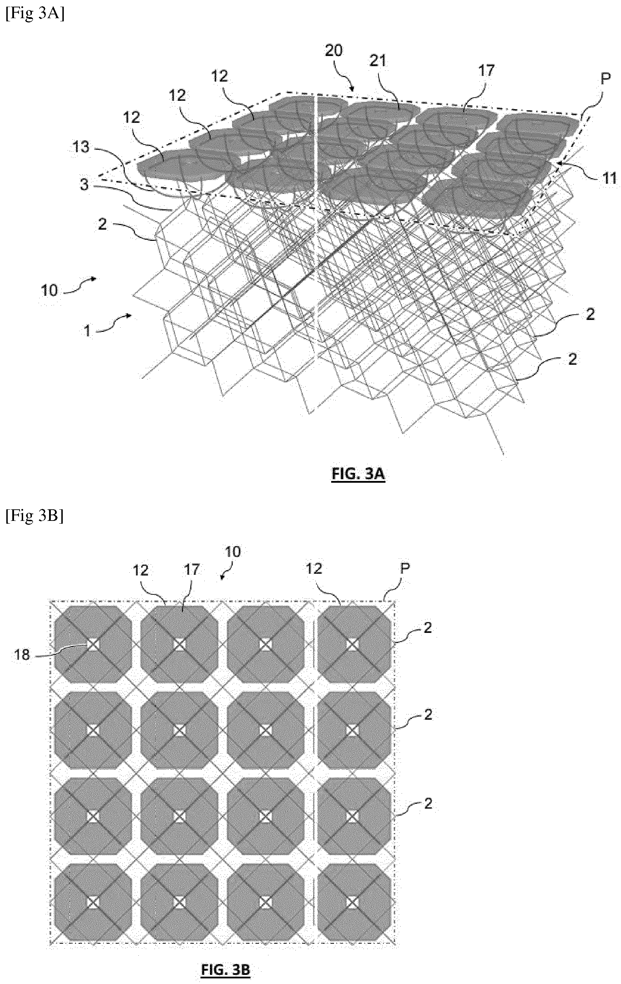

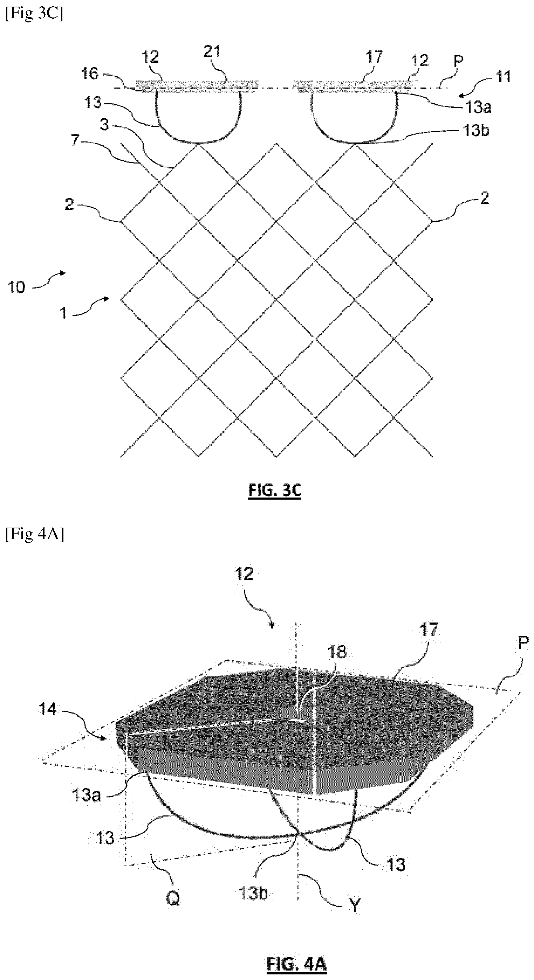

On a illustré aux figures 3A, 3B et 3C un exemple de structure architecturée en treillis 10 selon l'invention. La structure architecturée en treillis 10 est monolithique et comporte un treillis de corps 1 et un treillis superficiel 11 recouvrant le treillis de corps 1.

Le treillis de corps 1 est similaire au treillis 1 décrit dans le préambule et illustré aux figures 1A et 1B. Le treillis de corps 1 comporte une pluralité de motifs élémentaires de corps 2 répétés périodiquement dans l'espace et en contact les uns avec les autres. Les motifs élémentaires de corps 2 sont de type dodécaédrique rhombique, tels que décrits préalablement et illustrés aux figures 2A, 2B et 2C. Aussi, l'ensemble des caractéristiques déjà décrites concernant le treillis 1 et les motifs élémentaires de type dodécaédrique rhombique 2 des figures 1A à 2C sont applicables au treillis de corps 1 et aux motifs élémentaires de corps 2.

Le treillis superficiel 11 comprend une pluralité de motifs élémentaires superficiels 12 répétés périodiquement dans un plan P. Les motifs élémentaires superficiels 12 sont chacun en contact et connectés avec le treillis de corps 1.

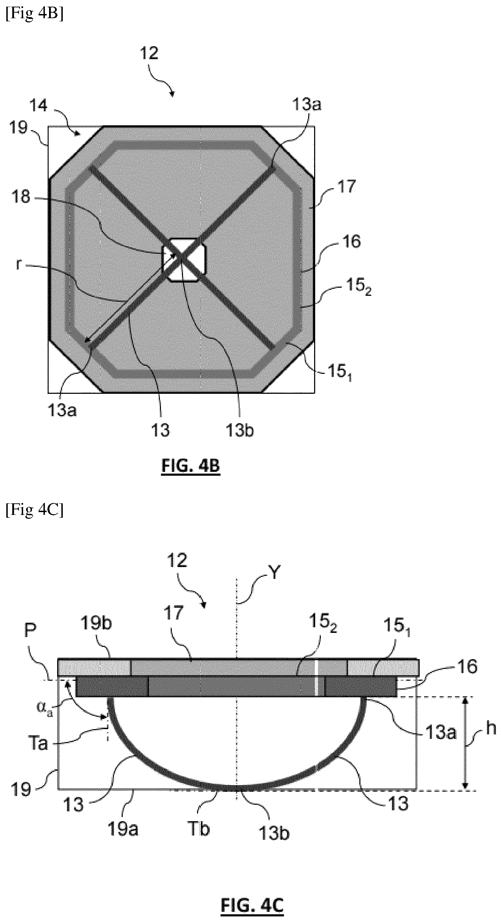

On a illustré aux figures 4A à 4C un motif élémentaire superficiel 12 du treillis superficiel 11 des figures 3A, 3B et 3C. Un tel motif élémentaire superficiel 12 comprend quatre pieds 13 et un bloc d'appui 14.

Chacun des pieds 13 est constitué d'une unique branche comprenant une extrémité 13a fixée au bloc d'appui 14.

L'unique branche du pied 13 comprend également une autre extrémité 13b, opposée à l'extrémité 13a et fixée aux brins de corps 3 du treillis de corps 1 formant un des sommets à angle aigus 5 du dodécaèdre rhombique 4, comme illustré par aux figures 3A et 3C. L'autre extrémité 13b est commune à chacun des pieds 13 du motif élémentaire superficiel 12.

Entre l'extrémité 13a et l'autre extrémité 13b, chaque pied 13 suit une ligne courbe comprise dans un plan Q perpendiculaire au plan P. Ainsi, comme illustré à la figure 4B, chacun des pieds 13 s'étend de manière rectiligne vue orthogonalement au plan P. Les pieds 13 sont concaves lorsqu'observé depuis le bloc d'appui 14.

La tangente Ta de la ligne courbe formée par le pied 13 à l'extrémité 13a forme un angle $\alpha_a$ avec le plan P égal à 90°. La tangente Tb de la ligne courbe formée par le pied 13 à l'extrémité 13b est parallèle avec le plan P. Les inclinaisons des tangentes Ta et Tb par rapport au plan P influencent la souplesse du pied 13.

La ligne courbe de chaque pied 13 peut être une courbe de Bézier quadratique. La courbe de Bézier quadratique est définie selon la formule :

[Math 2]

$$B(t) = (1-t)^2 P_0 + 2t(1-t)P_1 + t^2 P_2,$$

dans laquelle,

- t est un nombre réel positif compris entre 0 et 1,
- $P_0$ est le point de contrôle initial de la courbe de Bézier quadratique situé à l'extrémité 13b,
- $P_2$ est le point de contrôle final de la courbe de Bézier quadratique situé à l'extrémité 13a et
- $P_1$ est un point de contrôle intermédiaire de la courbe de Bézier.

La courbe de Bézier ne passe pas par le point de contrôle intermédiaire $P_1$. Les tangentes Ta et Tb passent par le point de contrôle intermédiaire $P_1$ de la courbe de Bézier. Le point de contrôle intermédiaire $P_1$ est localisé en fonction de la souplesse désiré pour le pied 13. Notamment, plus le point de contrôle intermédiaire $P_1$ est éloigné du segment reliant les points de contrôle initial $P_0$ et final $P_2$, plus la courbure du pied 13 est important et donc plus il est souple. De préférence, le point de contrôle intermédiaire $P_1$ est placé de sorte que la tangente Tb est parallèle au plan P.

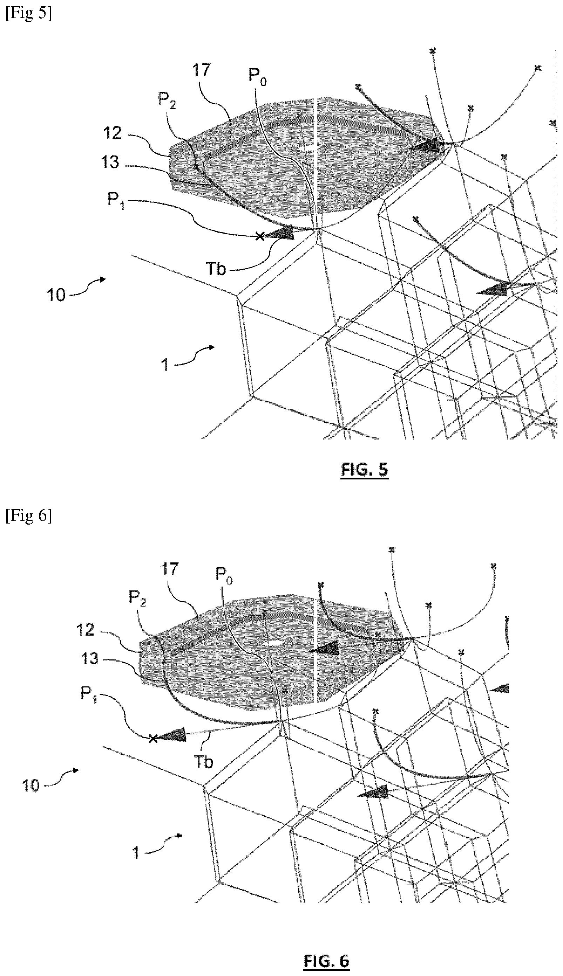

On a illustré aux figures 5, 6 et 7 des modes de réalisation d'une structure architecturée en treillis 10 présentant différentes positions du point de contrôle intermédiaire $P_1$ de la courbe de Bézier quadratique.

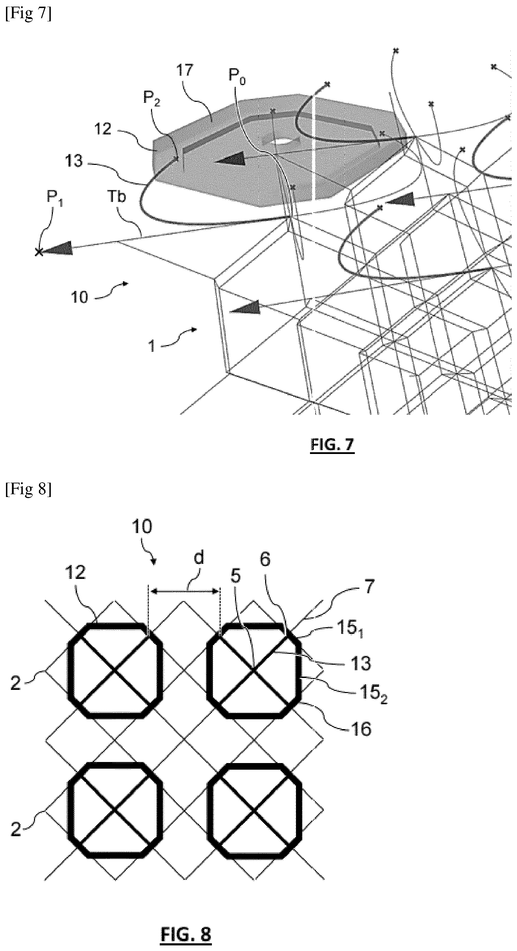

Dans l'exemple illustré par la figure 5, le point de contrôle intermédiaire $P_1$ est proche de l'extrémité 13b commune à chacun des pieds 13. Dans l'exemple illustré par la figure 6, le point de contrôle intermédiaire $P_1$ est éloigné de l'extrémité 13b commune à chacun des pieds 13 de sorte que la tangente Ta est normale au plan P. Dans l'exemple illustré par la figure 7, le point de contrôle intermédiaire $P_1$ est davantage de l'extrémité 13b commune à chacun des pieds 13 comparément à l'exemple illustré par la figure 6. Ainsi, les pieds 13 du mode de réalisation de la figure 5 sont plus rigides que les pieds 13 du mode de réalisation de la figure 6 qui sont plus rigides que les pieds 13 du mode de réalisation de la figure 7.

Alternativement, la ligne courbe de chaque pied 13 peut être une courbe de Bézier de degré supérieur à deux. Par exemple, la courbe de Bézier peut être de degré trois et définie par la formule :

[Math 3]

$$B(t) = (1-t)^3 P_0 + 3P_1 t(1-t)^2 + 3P_2 t^2(1-t) + P_3 t^3,$$

dans laquelle,

- t est un nombre réel positif compris entre 0 et 1,
- $P_0$ est le point de contrôle initial de la courbe de Bézier quadratique situé à l'extrémité 13b,
- $P_3$ est le point de contrôle final de la courbe de Bézier quadratique situé à l'extrémité 13a et
- $P_1$ et $P_2$ sont des points de contrôle intermédiaires de la courbe de Bézier. La courbe de Bézier ne passe pas par les point de contrôle intermédiaires $P_1$ et $P_2$.

La tangente Tb passe par le point de contrôle intermédiaire $P_1$ de la courbe de Bézier et la tangente Ta passe par le point de contrôle intermédiaire $P_2$ de la courbe de Bézier.

Chaque pied 13 peut en outre être caractérisé par des distances h et r, mesurées orthogonalement, respectivement parallèlement, au plan P, entre l'extrémité 13a et l'autre extrémité 13b. Les distances h et r sont chacune choisies en fonction du comportement en déformation désiré sous l'effet d'un effort de compression normal au plan P appliqué au bloc d'appui 14. La distance r influence notamment la rigidité du pied 13. Plus la distance r est grande, plus le pied 13 est souple, c'est-à-dire fléchit facilement. De préférence, la distance r est choisie de sorte que le treillis superficiel 11 présente un module de rigidité élastique inférieur ou égal au module de rigidité élastique du treillis de corps 1. La distance h influence notamment l'amplitude de la course en translation du bloc d'appui 14 selon un axe parallèle à l'effort de compression. Plus la distance h est grande plus ladite amplitude est grande. La distance h est la même pour chacun des pieds 13 de sorte que le bloc d'appui 14 reste parallèle au plan P sous l'effet d'un effort de compression normal au plan P.

Le bloc d'appui 14 s'étend dans le plan P, appelé plan médian P. Le bloc d'appui 14 comprend un ensemble de poutre d'armature $15_1$, $15_2$, reliées entre elles en formant une armature 16. Le bloc d'appui 14 comprend également une peau 17 portée et fixée sur l'armature 16.

L'armature 16 est parallèle au plan médian P. Elle est de forme hexagonale convexe et irrégulière. Notamment, les poutres d'armature $15_1$ les plus proches des brins de liaison 7 du motif élémentaire de corps 2 auquel est fixé le motif élémentaire superficiel 12 sont de longueur inférieure aux autres poutres d'armature $15_2$. En outre, les extrémités 13a des pieds 13 sont fixées auxdites poutres d'armature $15_1$ de longueur inférieure.

L'armature 16 est centrée autour d'un axe d'armature Y normal au plan médian P. L'armature est invariante par rotation d'angle $\pi/2$ autour de l'axe d'armature Y. De même, les pieds 13 sont invariants par rotation d'angle $\pi/2$ autour de l'axe d'armature Y.

Comme cela est illustré à la figure 8, dans laquelle la structure architecturée en treillis 10 des figures 3A, 3B et 3C est représentée sans les peaux 17, l'armature 16 d'un motif élémentaire superficiel 12 présente une forme complémentaire avec le motif élémentaire de corps 2 auquel sont fixés les pieds 13 du motif élémentaire superficiel 12. Vue orthogonalement au plan médian P, l'armature 16 entoure les brins de corps 3 formant le sommet 5 du dodécaèdre rhombique 4 le plus proche de ladite armature 16. De plus, vue orthogonalement au plan médian P, les brins de liaison 7 sont disposés à l'extérieur de l'armature 16. En particulier, vue orthogonalement au plan médian P, les poutres d'armature $15_1$ sont superposées aux points de liaison 6 entre les brins de liaison 7 et les brins de corps 3. En partant de l'armature 16 et en suivant une normale au plan médian P, les points du motif élémentaire de corps 2 les plus proches de l'armature 16 sont les points de liaison 6. La distance, mesurée orthogonalement au plan médian P, entre l'armature 16 et le motif élémentaire de corps 2 est ainsi maximisée. Ainsi, lorsque les pieds 13 sont déformés par un effort de compression avec l'extrémité 13a agencée dans la cellule élémentaire de corps 8, l'armature 16 reste distante des brins de corps 3 et des brins de liaison 7.

En outre, comme cela est illustré à la figure 8, vue orthogonalement au plan médian P, chaque pied 13 d'un motif élémentaire superficiel 12 est distant du plus proche pied 13 du plus proche motif élémentaire superficiel 12 adjacent d'une distance d supérieure à 1 mm.

Dans le mode de réalisation illustré aux figures 3A, 3B et 3C la peau 17 de chacun des motifs élémentaires superficiels 12 est disjointe des peaux 17 des motifs élémentaires superficiels adjacents. La peau 17 présente, vue orthogonalement, un pourtour extérieur ayant une forme d'un hexagone convexe et irrégulier. En particulier, la forme du pourtour extérieur de la peau 17 est un agrandissement du pourtour extérieur de l'armature 16. Ainsi, la peau 17 est conformée pour être distante des brins de liaison 7 lorsque les pieds 13 sont déformés par l'effort de compression et que l'extrémité 13a est comprise dans la cellule élémentaire de corps 8.

La peau 17 comprend une ouverture centrale 18 qui la traverse de part en part dans son épaisseur. L'ouverture centrale 18 est en vis-à-vis, c'est-à-dire alignée orthogonalement au plan médian P, de l'extrémité 13b commune à chacun des pieds 13. L'ouverture centrale 18 est donc également en vis-à-vis du sommet 5 du dodécaèdre rhombique 4 le plus proche de la peau 17. L'ouverture centrale 18 peut avoir la forme d'un hexagone convexe et irrégulier. En particulier, le pourtour extérieur de l'ouverture centrale 18 peut être une réduction du pourtour intérieur de l'armature 16.

Le motif élémentaire superficiel 12 est inscrit dans une cellule élémentaire superficielle 19, qui correspond au plus petit parallélépipède rectangle circonscrit au motif élémentaire superficiel 12.

La cellule élémentaire superficielle 19 comprend une face 19a comprenant l'extrémité 13b commune à chacun des pieds 13 en son centre. La face 19a est comprise dans une des faces de la cellule élémentaire de corps 8 en étant concentrique de ladite face de la cellule élémentaire de corps 8. Vue orthogonalement au plan médian P, les pieds 13 forment un X, plus particulièrement une croix de Saint André.

Les motifs élémentaires superficiels 12 définissent une face extérieure 20 de la structure 10. Cette face extérieure 20 est parallèle au plan P. Le treillis superficiel 11 présente une surface de contact 21 définie comme l'ensemble des points de la structure 10 de la surface enveloppant la face extérieure 20. La surface de contact 21 est composée de la surface de la peau 17 comprise dans la face 19b de la cellule élémentaire superficielle 19 opposée à la face 19a. Ainsi, la surface de contact 21 du treillis superficiel 11 est plus grande que la surface de contact 9 du treillis de corps 1. De plus, la surface de contact 21 du treillis superficiel 11 est exempte de pointe. Ainsi, la sensation de confort pour un utilisateur s'appuyant sur une structure architecturée en treillis 10 comportant un treillis de corps 1 et le treillis superficiel 11 recouvrant le treillis de corps 1 est améliorée.

Dans le cas où le bloc d'appui 14 est constitué uniquement de l'armature 16. La surface de contact 21 est la surface de l'armature 16 comprise dans la face 19b de la cellule élémentaire superficielle 19 opposée à la face 19a. La surface de contact 21 du treillis superficiel 11 est alors plus grande que la surface de contact 9 du treillis de corps 1. De plus, la surface de contact 21 du treillis superficiel 11 est exempte de pointe. Ainsi, la sensation de confort pour un utilisateur s'appuyant sur une structure architecturée en treillis 10 comportant un treillis de corps 1 et le treillis superficiel 11 recouvrant le treillis de corps 1 est améliorée.

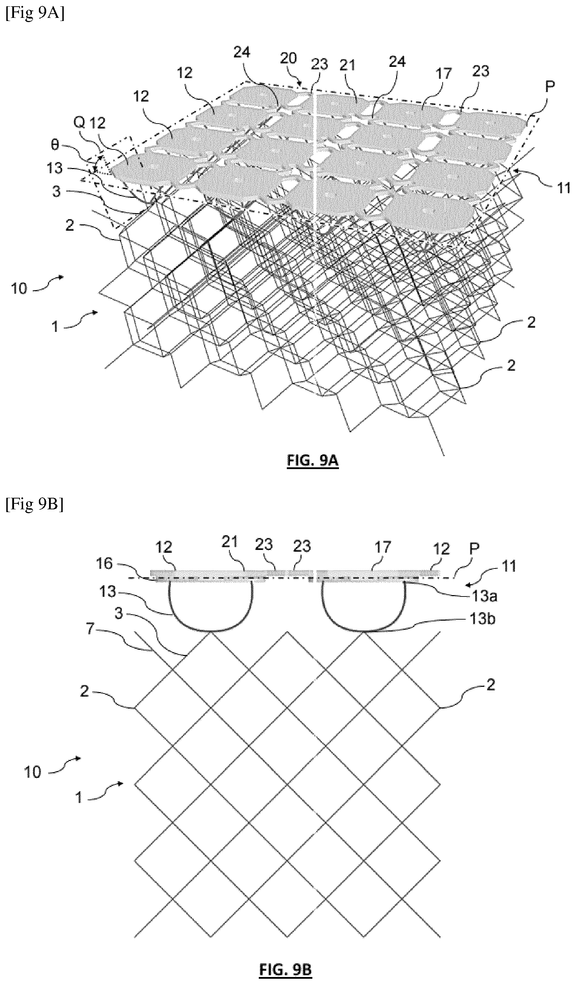

On a illustré aux figures 9A et 9B un autre exemple de structure architecturée en treillis 10 selon l'invention. La structure architecturée en treillis 10 des figures 9A et 9B diffère de celle des figures 3A, 3B et 3C en ce que les peaux 17 des différents motifs élémentaires superficiels 12 sont jointes solidairement les unes aux autres. La peau 17 de chaque motif élémentaire superficiel 12 comprend des points de contact 23 fixés solidairement aux points de contact 23 des peaux 17 adjacentes. Les points de contact 23 sont situés à proximité des sommets de la face 19b de la cellule élémentaire superficielle 19. Par ailleurs, chaque peau 17 comprend des rainures 24 s'étendant en vis-à-vis d'un des brins de liaison 7. Ainsi, lors d'une translation du bloc d'appui 14 orthogonalement au plan médian P, les brins de liaison 7 n'entrent pas en contact avec la peau 17.

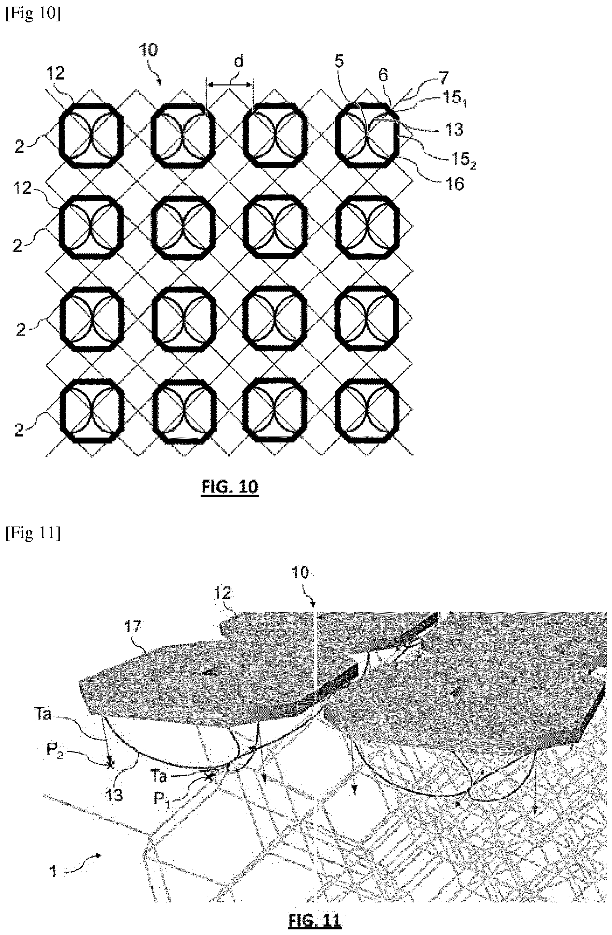

La structure architecturée en treillis 10 des figures 9A et 9B diffère également de celle des figures 3A, 3B et 3C en ce que, pour chaque pied 13, le plan Q comprenant la ligne courbe suivie par ledit pied 13 est oblique par rapport au plan P. Ledit plan Q forme un angle d'inclinaison θ avec le plan P inférieur à 90°. Ainsi, comme illustré à la figure 10, dans laquelle la structure architecturée en treillis 10 des figures 9A et 9B est représentée sans les peaux 17, chacun des pieds 13 s'étend de manière curviligne vue orthogonalement au plan P.

On a illustré à la figure 11 un autre exemple de structure architecturée en treillis 10 selon l'invention. La structure architecturée en treillis 10 de la figure 11 diffère de celle des figures 3A, 3B et 3C en ce que les pieds 13 ne s'étendent pas selon une ligne courbe étant une courbe de Bézier quadratique. Les pieds 13 de la structure architecturée en treillis 10 de la figure 11 s'étendent le long d'une ligne courbe tridimensionnelle, la ligne courbe étant une courbe de Bézier cubique définie par l'équation [Math 3]. Le point de contrôle intermédiaire $P_1$ de la courbe de Bézier est localisé de sorte que la tangente Tb est parallèle au plan médian P. Le point de contrôle intermédiaire $P_2$ de la courbe de Bézier est localisé de sorte que la tangente Ta est normale au plan médian P.

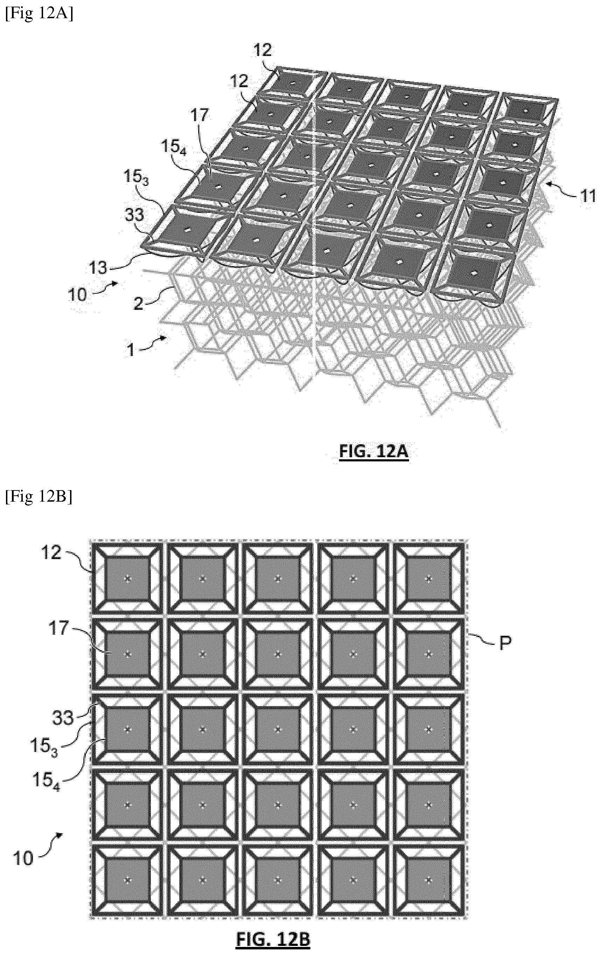

On a illustré aux figures 12A et 12B un autre exemple de structure architecturée en treillis 10 selon l'invention. La structure architecturée en treillis 10 des figures 12A et 12B diffère de celle des figures 3A, 3B et 3C en ce que l'armature 16 de chaque motif élémentaire superficiel 12 comprend un ensemble de poutre d'armature $15_3$ reliées entre elles en formant un premier carré et un ensemble de poutre d'armature $15_4$ reliées entre elles en formant un deuxième carré agencé dans le premier carré. Les premier et deuxième carrés sont concentriques et inclus le plan médian P. L'armature 16 comprend également des poutres d'interconnexion 33 reliant les sommets du premier carré aux sommets du deuxième carré. Les extrémités 13a des pieds 13 sont fixées aux poutre d'armature $15_3$ formant le premier carré. La peau 17 de chaque motif élémentaire superficiel 12 est logée dans, et supportée par, les poutres d'armature $15_4$ formant le deuxième carré en épousant la forme dudit carré. La peau 17 est également incluse dans le plan médian P. Ainsi, la surface de contact 21 du treillis superficiel 11 comprend, en outre de la surface de la peau 17, la surface de l'armature 16 comprise dans la face 19b de la cellule élémentaire superficielle 19 opposée à la face 19a. Il est possible de faire varier le pourcentage de la face du motif élémentaire superficiel 12, vue orthogonalement au plan médian P, couvert par la peau 17 en diminuant ou en augmentant la distance entre le premier et le deuxième carré.

Exemple 1

Les inventeurs ont réalisé une première série de tests comparatifs en essai de compression de structures architecturées en treillis 10 similaires à celle illustrée aux figures 12A et 12B et de structures architecturées en treillis témoins constituées uniquement d'un treillis de corps 1. Les motifs élémentaires de corps 2 des structures architecturées en treillis témoins sont identiques aux motifs élémentaires de corps 2 du treillis de corps 1 de la structure architecturée en treillis 10 illustrée aux figures 2A, 2B et 2C. Pour chacune des structures architecturées en treillis testées, les cellules élémentaires de corps 8 sont des cubes de 15 mm de côté, les brins de corps 3 et les brins de liaison 7 ont un diamètre de 1,0 mm, le treillis de corps 1 est composé de trois strates carrées superposées entre elles et comprenant chacune cinq rangées de cinq motifs élémentaires de corps 2 alignés. Pour chacune des structures architecturées en treillis 10 selon l'invention testées, les pieds 13 ont un diamètre de 0,9 mm, pour chaque pied 13, la distance h, mesurée orthogonalement au plan P, entre l'extrémité 13a et l'autre extrémité 13b est égale à 6 mm, et, le point intermédiaire $P_1$ de la courbe de Bézier quadratique est distant de 7,3 mm de l'extrémité 13b commune à chacun des pieds 13. Par ailleurs, toutes les structures architecturées en treillis sont monolithiques et faites de polyuréthane thermoplastique (TPU), lesdites structures architecturées en treillis étant obtenues par fabrication additive sur lit de poudre, par « Multi Jet Fusion ».

Les essais en compression ont été réalisés selon une direction normale au plan P dans lequel s'étend le treillis superficiel 11. Pour chacune des structures architecturées en treillis testées, l'essai en compression consiste en l'application d'une précharge de 2 N suivie de quatre compressions à une vitesse de déplacement selon un axe parallèle aux axes d'armature Y de 5 mm/min jusqu'à une déformation de 70 % puis une cinquième compression à une vitesse de 1 mm/min.

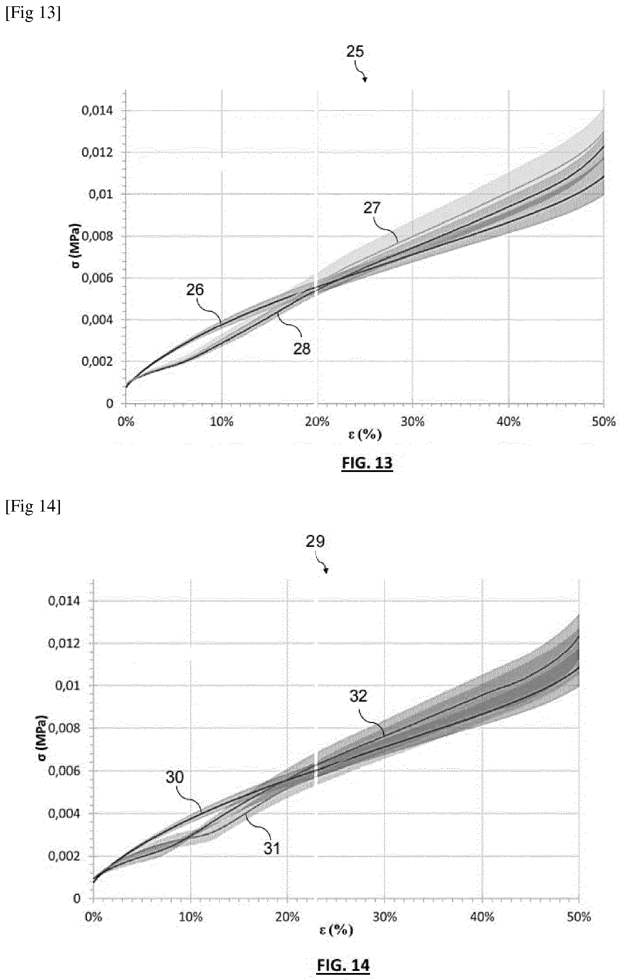

On a illustré à la figure 13 les résultats des cinquièmes compressions sous forme de graphique 25 contrainte vs déformation. Le graphique 25 comprend une courbe 26 de la valeur moyenne en contrainte-déformation des essais en compression de trois structures architecturées en treillis témoins réalisées par un même procédé d'impression 3D. Le graphique 25 comprend également des courbes 27 et 28, chacune de la valeur moyenne en contrainte-déformation des essais en compression de trois exemples de structures architecturées en treillis 10 selon l'invention réalisées par un même procédé d'impression 3D. Par ailleurs, le pourcentage de la face du motif élémentaire superficiel, vue orthogonalement au plan médian P, couvert par la peau 17 de chaque cellule élémentaire superficielle 19 des structures architecturées en treillis 10 testées pour la courbe 27 est supérieur au pourcentage de la face du motif élémentaire superficiel, vue orthogonalement au plan médian P, couvert par la peau 17 de chaque cellule élémentaire superficielle 19 des structures architecturées en treillis 10 testées pour la courbe 28.

Comme observé sur le graphique 25, pour une même déformation inférieure à 20 %, la contrainte dans les structures 10 selon l'invention est inférieure à la contrainte dans les structures témoins. Cela est mis en évidence par l'écart en contrainte, à une déformation fixée, entre la courbe 26 et la courbe 27 ou 28. Autrement dit, pour cette gamme de déformations les structures 10 selon l'invention sont plus souples que les structures témoins. Ainsi, la présence d'un treillis superficiel 11 sur un treillis de corps 1 de la structure architecturée en treillis 10 selon l'invention procure une amélioration du confort pour l'utilisateur en appui sur ladite structure 10 pour des déformations inférieures à 20 %.

<u>Exemple 2</u>

Les inventeurs ont réalisé une deuxième série de tests comparatifs en essai de compression de structures architecturées en treillis 10 similaires à celle illustrée à la figure 11 et de structures architecturées en treillis témoins constituées uniquement d'un treillis de corps 1. Les motifs élémentaires de corps 2 des structures architecturées en treillis témoins sont identiques aux motifs élémentaires de corps 2 du treillis de corps 1 de la structure architecturée en treillis 10 illustrée aux figures 2A, 2B et 2C. Pour chacune des structures architecturées en treillis testées, les cellules élémentaires de corps 8 sont des cubes de 15 mm de côté, les brins de corps 3 et les brins de liaison 7 ont un diamètre de 1,0 mm, le treillis de corps 1 est composé de trois strates carrées superposées entre elles et comprenant chacune cinq rangées de cinq motifs élémentaires de corps 2 alignés. Pour chacune des structures architecturées en treillis 10 selon l'invention testées, les pieds 13 ont un diamètre de 0,9 mm, pour chaque pied 13, la distance h, mesurée orthogonalement au plan P, entre l'extrémité 13a et l'autre extrémité 13b est égale à 6 mm. Par ailleurs, toutes les structures architecturées en treillis sont monolithiques et faites de polyuréthane thermoplastique (TPU), lesdites structures architecturées en treillis étant obtenues par fabrication additive sur lit de poudre, par « Multi Jet Fusion ».

Les essais en compression ont été réalisés selon une direction normale au plan P dans lequel s'étend le treillis superficiel 11. Pour chacune des structures architecturées en treillis testées, l'essai en compression consiste en l'application d'une précharge de 2 N suivie de quatre compressions à une vitesse de déplacement selon un axe parallèle aux axes d'armature Y de 5 mm/min jusqu'à une déformation de 70 % puis une cinquième compression à une vitesse de 1 mm/min.

On a illustré à la figure 14 les résultats des cinquièmes compressions sous forme de graphique 29 contrainte vs déformation. Le graphique 29 comprend une courbe 30 de la valeur moyenne en contrainte-déformation des essais en compression de trois structures architecturées en treillis témoins réalisées par un même procédé d'impression 3D. Le graphique 29 comprend également des courbes 31 et 32, chacune de la valeur moyenne en contrainte-déformation des essais en compression de trois exemples de structures architecturées en treillis 10 selon l'invention réalisées par un même procédé d'impression 3D. Pour les structures architecturées en treillis 10 testées pour la courbe 31, le point intermédiaire $P_1$ de la courbe de Bézier quadratique est distant de 2,8 mm de l'extrémité 13b commune à chacun des pieds 13, et, le point intermédiaire $P_2$ de la courbe de Bézier quadratique est distant de 4,0 mm de l'extrémité 13a fixée au bloc d'appui 14. Pour les structures architecturées en treillis 10 testées pour la courbe 32, le point intermédiaire $P_1$ de la courbe de Bézier quadratique est distant de 5,4 mm de l'extrémité 13b commune à chacun des pieds 13, et, le point intermédiaire $P_2$ de la courbe de Bézier quadratique est distant de 5,4 mm de l'extrémité 13a fixée au bloc d'appui 14.

Comme observé sur le graphique 29, pour une même déformation inférieure à 20 %, la contrainte dans les structures 10 selon l'invention est inférieure à la contrainte dans les structures témoins. Cela est mis en évidence par l'écart en contrainte, à une déformation fixée, entre la courbe 30 et la courbe 31 ou 32. Autrement dit, pour ces faibles déformation les structure 10 selon l'invention sont plus souples que les structures témoins. Ainsi, la présence d'un treillis superficiel 11 sur un treillis de corps 1 de la structure architecturée en treillis 10 selon l'invention procure une amélioration du confort pour l'utilisateur en appui sur ladite structure 10 pour des déformations inférieures à 20 %.

D'autres variantes et améliorations peuvent bien évidemment être envisagées sans pour autant sortir du cadre de l'invention tel que défini par les revendications ci-après. En particulier, bien que décrite avec un treillis de corps comportant une pluralité de motifs élémentaires de corps de type dodécaédrique rhombique, l'invention est adaptée pour d'autres types de motifs élémentaires de corps.

**Revendications**

1. Structure (10) architecturée en treillis comprenant :

   - un treillis de corps (1) comportant une pluralité de motifs élémentaires de corps (2) répétés périodiquement et en contact les uns avec les autres, chaque motif élémentaire de corps comportant des brins de corps (3) reliés entre eux pour former les arêtes d'un polyèdre (4) et des brins de liaison (7) reliant le polyèdre aux sommets de la cellule élémentaire de corps (8), qui est le plus petit parallélépipède rectangle circonscrit au motif élémentaire de corps,
   - un treillis superficiel (11) définissant une face (20) de la structure et recouvrant au moins partiellement le treillis de corps, le treillis superficiel comportant une pluralité de motifs élémentaires superficiels (12) répétés périodiquement,

   chaque motif élémentaire superficiel comportant un bloc d'appui (14) s'étendant dans un plan médian (P), parallèle à la face de la structure définie par le treillis superficiel, et des pieds (13) déformables chacun comportant une extrémité (13a), fixée au bloc d'appui et distante des autres pieds, et, une autre extrémité (13b), distante du plan médian et commune à tous les autres pieds et à au moins un brin de corps,
   le treillis superficiel étant configuré pour que sous l'effet d'un effort de compression normal au plan médian, les pieds se déforment pour déplacer le bloc d'appui en translation selon un axe parallèle à l'effort de compression.

2. Structure selon la revendication précédente, les pieds de chaque motif élémentaire superficiel étant disjoints les uns des autres sur leurs portions entre l'extrémité fixée au bloc d'appui et l'extrémité commune à chacun des pieds et à au moins un brin de corps.

3. Structure selon l'une quelconque des revendications précédentes, l'extrémité commune à chacun des pieds et à au moins un brin de corps étant fixée à un des sommets (5) du polyèdre, de préférence ledit sommet étant compris dans une des faces de la cellule élémentaire de corps, de préférence ledit sommet étant au centre de ladite face de la cellule élémentaire de corps.

4. Structure selon l'une quelconque des revendications précédentes, vue orthogonalement au plan médian, l'extrémité commune à chacun des pieds et à au moins un brin de corps étant équidistante de chacune des extrémités fixées au bloc d'appui du motif élémentaire superficiel.

5. Structure selon l'une quelconque des revendications précédentes, vue orthogonalement au plan médian, chacune des extrémités fixées au bloc d'appui étant équidistante des deux autres extrémités les plus proches qui sont fixées au bloc d'appui.

6. Structure selon l'une quelconque des revendications précédentes, chaque motif élémentaire superficiel comportant quatre pieds, de préférence, vue orthogonalement au plan médian, les pieds formant ensemble un motif en forme de X.

7. Structure selon l'une quelconque des revendications précédentes, chaque pied étant symétrique d'au moins deux pieds adjacents, chaque symétrie étant opérée par rapport à un plan perpendiculaire au plan médian.

8. Structure selon l'une quelconque des revendications précédentes, chacun des pieds s'étendant le long d'une ligne courbe, de préférence la ligne courbe étant une courbe de Bézier ou un arc d'ellipse.

9. Structure selon l'une quelconque des revendications précédentes, chaque motif élémentaire superficiel étant inscrit dans une cellule élémentaire superficielle (19) de forme parallélépipèdique rectangle et présentant une face (19a) comprise dans une face d'une des cellules élémentaires de corps.

10. Structure selon l'une quelconque des revendications précédentes, le bloc d'appui comportant une armature (16) comportant une pluralité de poutres d'armature ($15_1$, $15_2$) reliées entre elles pour former les côtés d'au moins un polygone parallèle au plan médian.

11. Structure selon l'une quelconque des revendications précédentes, le bloc d'appui couvrant au moins 50 % de la face du motif élémentaire superficiel vue orthogonalement au plan médian, de préférence le bloc d'appui comportant une peau (17) s'étendant parallèlement au plan médian et couvrant au moins 50 % de la face du motif élémentaire superficiel vue orthogonalement au plan médian.

12. Structure selon l'une quelconque des revendications précédentes, la structure architecturée en treillis étant monolithique, de préférence faite d'un même matériau.

13. Structure selon l'une quelconque des revendications précédentes, le polyèdre étant un dodécaèdre rhombique, de préférence les brins de liaison reliant les sommets à angles obtus (6) du dodécaèdre rhombique aux sommets de la cellule élémentaire de corps.

14. Dispositif choisi parmi :

- un amortisseur de choc,
- un support de soutien corporel, par exemple une assise de sièges, un coussin, un matelas, un accoudoir, un appui-tête, un rembourrage de casque, ou un repose-poignet, et
- un organe de préhension, par exemple une poignée de préhension, ou un volant directionnel,

le dispositif comportant une structure architecturée en treillis selon l'une quelconque des revendications précédentes.

15. Procédé de fabrication d'une structure architecturée en treillis selon l'une quelconque des revendications 1 à 13 au moyen d'une technique de fabrication additive.

**Patentansprüche**

1. Gitterförmig gestaltete Struktur (10), die Folgendes umfasst:

- ein Körpergitter (1), das eine Mehrzahl von elementaren Körpermustern (2) umfasst, die periodisch wiederholt werden und in Kontakt miteinander sind, wobei jedes elementare Körpermuster Körperstränge (3), die untereinander verbunden sind, um die Kanten eines Polyeders (4) zu bilden, und Verbindungsstränge (7) umfasst, die das Polyeder mit den Ecken der elementaren Körperzelle (8) verbinden, die das kleinste rechteckige Parallelepiped ist, das dem elementaren Körpermuster umschrieben ist,
- ein Oberflächengitter (11), das eine Fläche (20) der Struktur definiert und das Körpergitter zumindest teilweise bedeckt, wobei das Oberflächengitter mehrere periodisch wiederholte elementare Oberflächenmuster (12) umfasst,

wobei jedes elementare Oberflächenmuster einen Stützblock (14), der sich in einer Mittelebene (P) parallel zu der Fläche der Struktur erstreckt, die durch das Oberflächengitter definiert ist, und verformbare Füße (13) umfasst, die jeweils ein Ende (13a), das an dem Stützblock befestigt ist und von den anderen Füßen beabstandet ist, und ein anderes Ende (13b), das von der Mittelebene entfernt und allen anderen Füßen und mindestens einem Körperstrang gemeinsam ist, umfassen, wobei das Oberflächengitter so konfiguriert ist, dass sich unter der Wirkung einer Druckkraft senkrecht zur Mittelebene die Füße verformen, um den Stützblock translatorisch entlang einer Achse parallel zur Druckkraft zu verlagern.

2. Struktur nach dem vorhergehenden Anspruch, wobei die Füße jedes elementaren Oberflächenmusters an ihren Abschnitten zwischen dem am Stützblock befestigten Ende und dem jedem der Füße und mindestens einem Körperstrang gemeinsamen Ende voneinander getrennt sind.

3. Struktur nach einem der vorhergehenden Ansprüche, wobei das jedem der Füße und mindestens einem Körperstrang gemeinsame Ende an einem der Ecken (5) des Polyeders befestigt ist, wobei die Ecke vorzugsweise in einer der Flächen der elementaren Körperzelle enthalten ist, wobei sich die Ecke vorzugsweise in der Mitte der Fläche der elementaren Körperzelle befindet.

4. Struktur nach einem der vorhergehenden Ansprüche, wobei senkrecht zu der Mittelebene gesehen das jedem der Füße und mindestens einem Körperstrang gemeinsame Ende von jedem der Enden, die an dem Stützblock des elementaren Oberflächenmusters befestigt sind, äquidistant ist.

5. Struktur nach einem der vorhergehenden Ansprüche, wobei senkrecht zu der Mittelebene gesehen jedes der Enden, die an dem Stützblock befestigt sind, äquidistant von den anderen zwei nächstgelegenen Enden ist, die an dem Stützblock befestigt sind.

6.  Struktur nach einem der vorhergehenden Ansprüche, wobei jedes elementare Oberflächenmuster vier Füße umfasst, wobei vorzugsweise senkrecht zur Mittelebene gesehen die Füße zusammen ein X-förmiges Muster bilden.

7.  Struktur nach einem der vorhergehenden Ansprüche, wobei jeder Fuß symmetrisch zu mindestens zwei benachbarten Füßen ist, wobei jede Symmetrie bezüglich einer Ebene senkrecht zur Mittelebene erfolgt.

8.  Struktur nach einem der vorhergehenden Ansprüche, wobei sich jeder der Füße entlang einer gekrümmten Linie erstreckt, wobei die gekrümmte Linie vorzugsweise eine Bezier-Kurve oder ein Bogen einer Ellipse ist.

9.  Struktur nach einem der vorhergehenden Ansprüche, wobei jedes elementare Oberflächenmuster in eine elementare Oberflächenzelle (19) mit rechteckiger Parallelepipedform eingeschrieben ist und eine Fläche (19a) aufweist, die in einer Fläche einer der elementaren Körperzellen enthalten ist.

10.  Struktur nach einem der vorhergehenden Ansprüche, wobei der Stützblock eine Bewehrung (16) umfasst, die mehrere Bewehrungsträger ($15_1$, $15_2$) umfasst, die miteinander verbunden sind, um die Seiten mindestens eines Polygons parallel zu der Mittelebene zu bilden.

11.  Struktur nach einem der vorhergehenden Ansprüche, wobei der Stützblock mindestens 50 % der Fläche des elementaren Oberflächenmusters, gesehen senkrecht zu der Mittelebene, bedeckt, vorzugsweise der Stützblock eine sich parallel zur Mittelebene erstreckende Haut (17) umfasst, die mindestens 50 % der Fläche des elementaren Oberflächenmusters, senkrecht zur Mittelebene gesehen, überdeckt.

12.  Struktur nach einem der vorhergehenden Ansprüche, wobei die gitterförmig gestaltete Struktur monolithisch ist, vorzugsweise aus demselben Material hergestellt ist.

13.  Struktur nach einem der vorhergehenden Ansprüche, wobei das Polyeder ein rhombisches Dodekaeder ist, vorzugsweise die Verbindungsstränge die stumpfwinkligen Ecken (6) des rhombischen Dodekaeders mit den Ecken der elementaren Körperzelle verbinden.

14.  Vorrichtung, ausgewählt aus:

    - einem Stoßdämpfer,
    - einer Körperhaltestütze, zum Beispiel einer Sitzfläche eines Sitzes, einem Kissen, einer Matratze, einer Armlehne, einer Kopfstütze, einer Helmpolsterung oder einer Handgelenkauflage, und
    - einem Greiforgan, zum Beispiel einem Haltegriff oder einem Lenkrad,

    wobei die Vorrichtung eine gitterförmig gestaltete Struktur nach einem der vorhergehenden Ansprüche umfasst.

15.  Verfahren zum Herstellen einer gitterförmig gestalteten Struktur nach einem der Ansprüche 1 bis 13 mittels einer additiven Herstellungstechnik.


**Claims**

1.  Architectured lattice structure (10) comprising:

    - a body lattice (1) having a plurality of body unit patterns (2) that are repeated periodically and in contact with one another, each body unit pattern having body strands (3) connected to each other to form the edges of a polyhedron (4) and connecting strands (7) connecting the polyhedron to the vertices of the body unit cell (8), which is the smallest rectangular parallelepiped circumscribing the body unit pattern,
    - a surface lattice (11) defining a face (20) of the structure and at least partially covering the body lattice, the surface lattice having a plurality of surface unit patterns (12) that are repeated periodically,

        each surface unit pattern having a supporting block (14) extending in a median plane (P), parallel to the face of the structure defined by the surface lattice, and deformable feet (13) that each have one end (13a), fastened to the supporting block and at a distance from the other feet, and another end (13b), at a distance from the median plane and common to all the other feet and to at least one body strand,
the surface lattice being configured so that, under the effect of a compressive force normal to the median plane, the feet deform to move the supporting block in translation along an axis parallel to the compressive force.

2. Structure according to the preceding claim, the feet of each surface unit pattern being separated from one another on their portions between the end fastened to the supporting block and the end common to each of the feet and to at least one body strand.

3. Structure according to any one of the preceding claims, the end common to each of the feet and to at least one body strand being fastened to one of the vertices (5) of the polyhedron, said vertex preferably being included in one of the faces of the body unit cell, said vertex preferably being at the centre of said face of the body unit cell.

4. Structure according to any one of the preceding claims, seen orthogonally to the median plane, the end common to each of the feet and to at least one body strand being equidistant from each of the ends fastened to the supporting block of the surface unit pattern.

5. Structure according to any one of the preceding claims, seen orthogonally to the median plane, each of the ends fastened to the supporting block being equidistant from the other two nearest ends which are fastened to the supporting block.

6. Structure according to any one of the preceding claims, each surface unit pattern having four feet, preferably, seen orthogonally to the median plane, the feet together forming an X-shaped pattern.

7. Structure according to any one of the preceding claims, each foot being symmetrical with at least two adjacent feet, each symmetry being effected with respect to a plane perpendicular to the median plane.

8. Structure according to any one of the preceding claims, each of the feet extending along a curved line, the curved line preferably being a Bézier curve or an arc of an ellipse.

9. Structure according to any one of the preceding claims, each surface unit pattern being inscribed in a surface unit cell (19) of rectangular parallelepiped shape and having a face (19a) included in a face of one of the body unit cells.

10. Structure according to any one of the preceding claims, the supporting block comprising a reinforcement (16) comprising a plurality of reinforcement beams ($15_1$, $15_2$) interconnected to form the sides of at least one polygon parallel to the median plane.

11. Structure according to any one of the preceding claims, the supporting block covering at least 50% of the face of the surface unit pattern seen orthogonally to the median plane, the supporting block preferably comprising a skin (17) extending parallel to the median plane and covering at least 50% of the face of the surface unit pattern seen orthogonally to the median plane.

12. Structure according to any one of the preceding claims, the architectured lattice structure being monolithic, preferably made from one and the same material.

13. Structure according to any one of the preceding claims, the polyhedron being a rhombic dodecahedron, the connecting strands preferably connecting the obtuse-angled vertices (6) of the rhombic dodecahedron to the vertices of the body unit cell.

14. Device selected from:

- a shock absorber,
- a support for the body, for example a seat cushion for seats, a cushion, a mattress, an armrest, a headrest, a helmet liner or a wrist support, and
- a holding member, for example a holding handle, or a steering wheel,

the device having an architectured lattice structure according to any one of the preceding claims.

15. Method for manufacturing an architectured lattice structure according to any one of Claims 1 to 13 by means of an additive manufacturing technique.

[Fig 1A]

**FIG. 1A**

[Fig 1B]

**FIG. 1B**

[Fig 2A]

**FIG. 2A**

[Fig 2B]

**FIG. 2B**

[Fig 2C]

**FIG. 2C**

[Fig 3A]

**FIG. 3A**

[Fig 3B]

**FIG. 3B**

[Fig 3C]

FIG. 3C

[Fig 4A]

FIG. 4A

[Fig 4B]

**FIG. 4B**

[Fig 4C]

**FIG. 4C**

[Fig 5]

FIG. 5

[Fig 6]

FIG. 6

[Fig 7]

FIG. 7

[Fig 8]

FIG. 8

[Fig 9A]

**FIG. 9A**

[Fig 9B]

**FIG. 9B**

[Fig 10]

**FIG. 10**

[Fig 11]

**FIG. 11**

[Fig 12A]

**FIG. 12A**

[Fig 12B]

**FIG. 12B**

[Fig 13]

**FIG. 13**

[Fig 14]

**FIG. 14**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021187897 A1

- EP 3954252 A1

**Littérature non-brevet citée dans la description**

- **M. NASIM** ; **U. GALVANETTO**. Mechanical characterisation of additively manufactured PA12 lattice structures under quasi-static compression. *Materials Today Communications*, 2021, vol. 29, 102902